# EUROPÄISCHE PATENTSCHRIFT

(11) **EP 1 625 912 B1**
(45) Veröffentlichungstag und Bekanntmachung des Hinweises auf die Patenterteilung: **13.06.2007**
(21) Anmeldenummer: 05000908.3
(22) Anmeldetag: 18.01.2005
(51) Int. Cl.: B23Q 11/08

(54) **Gliederbahn mit kleinem Umlenkradius**
Track with linked elements with small turn radius
Dispositif à maillons de chaîne avec un petit radius de rotation

(30) Priorität: 10.08.2004 DE 102004038854; 22.09.2004 DE 102004045931
(43) Veröffentlichungstag der Anmeldung: 15.02.2006
(73) Patentinhaber: Hennig Holding GmbH, 85543 Kirchheim (DE)
(72) Erfinder: Schönerwald, Kurt, 84186 Vilsheim (DE)
(74) Vertreter: Rau, Manfred

(56) Entgegenhaltungen:
- DE-A1- 10 065 065
- DE-A1- 10 065 092
- DE-U1- 29 824 689

## Beschreibung

Die Erfindung betrifft eine Gliederbahn, insbesondere eine Gliederschürze oder Abdeckschürze zur Abdeckung von Öffnungen, insbesondere von Werkzeugmaschinen, mit Gliedern, die gelenkig miteinander verbunden sind, wobei die Glieder an ihren Enden eine Aufnahme für einen Führungssteg zur Führung der Gliederbahn aufweisen.

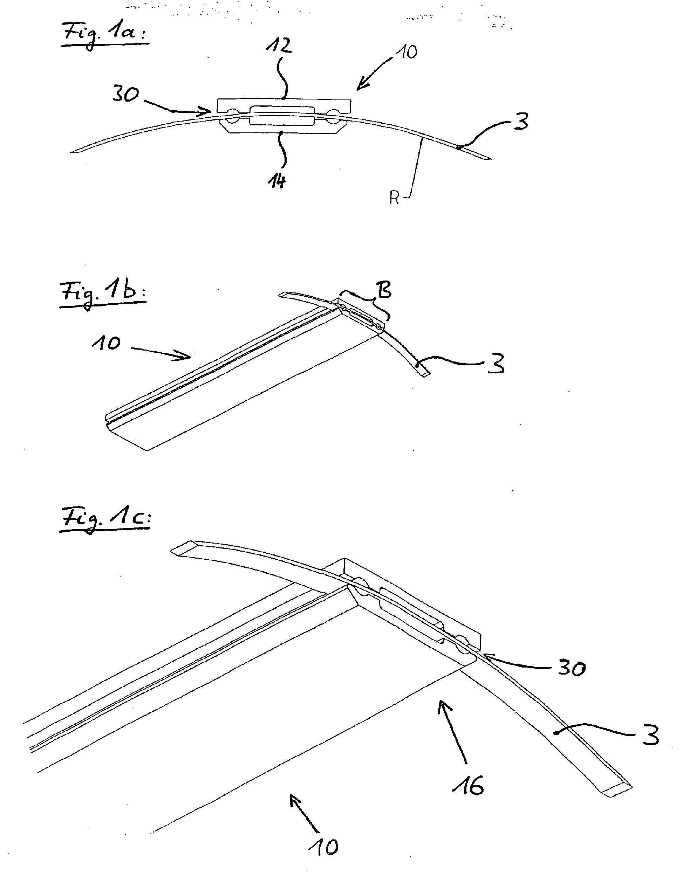

Gliederbahnen mit einer Aufnahme für einen Führungssteg zur Führung der Gliederbahn sind vorbekannt. Bei den vorbekannten Gliederbahnen wird die Aufnahme durch einen stirnseitigen Schlitz in den Gliedern gebildet. Ein Glied einer vorbekannten Gliederbahn ist in den Figuren 1a bis 1c gezeigt. Der Schlitz erstreckt sich über die gesamte Breite des Gliedes und ist nicht wesentlich breiter als der Führungssteg.

Die vorbekannten Gliederbahnen weisen den Nachteil auf, daß der Führungssteg im Wesentlichen gerade sein muss oder nur geringfügige Biegungen, d. h. große Umlenkradien, aufweisen darf. Führungsstege mit kleinen Umlenkradien bzw. starken Biegungen können mit den vorbekannten Gliederbahnen nicht realisiert werden.

Es gibt jedoch Einsatzgebiete, in denen es erwünscht ist, eine Gliederbahn über einen Führungssteg mit kleinem Umlenkradius zu verschieben, u. a. um die Gliederbahn auf möglichst kleinem Raum einzurollen. Wenn beispielsweise eine zur Abdeckung einer Öffnung eingesetzte Gliederbahn die abgedeckte Öffnung freigegeben soll, ist häufig angestrebt, sie auf möglichst kleinem Raum einzurollen, was die vorbekannten Gliederbahnen nicht zulassen.

Aus der DE 196 16 483 C2 ist eine Gliederbahn der gattungsgemäßen Art bekannt, bei der die Aufnahme für einen Führungssteg an der Außenseite der gekrümmten Führungsbahn durch zwei von einander beabstandete Stege und auf der Innenseite der gekrümmten Führungsbahn durch einen halbzylindrischen Steg gebildet ist. Mit dieser Ausgestaltung lassen sich zwar gebogene Abschnitte der Führungsbahn überstreichen; eine zuverlässige Führung insbesondere auf geraden Abschnitten oder auch bei unterschiedlich gekrümmten Abschnitten ist hiermit nicht gewährleistet.

Es ist daher Aufgabe der vorliegenden Erfindung, die vorbekannten Gliederbahnen zu verbessern. Insbesondere sollen Gliederbahnen vorgeschlagen werden, die auch Führungsstege mit kleinem Umlenkradien zulassen.

Die Aufgabe wird durch die erfindungsgemäße Ausgestaltung der am Ende der Glieder befindlichen Aufnahme für den Führungssteg gelöst. Allerdings muss nicht jedes Glied der Gliederbahn und/oder nicht jedes Ende eines Gliedes mit einer erfindungsgemäß ausgestalteten Aufnahme versehen sein. Die erfindungsgemäße Aufnahme wird durch eine zur Stirnseite des Gliedes geöffnete Vertiefung gebildet, deren Tiefe vorzugsweise in etwa der Höhe des Führungssteges entspricht. Die Breite der Vertiefung ist derart gewählt, daß der Führungssteg mit Spiel darin Platz hat. Die Vertiefung wird zur Frontseite des Gliedes durch eine frontseitige und zur Rückseite des Gliedes durch eine rückseitige Einfassung begrenzt. Auf diese Weise kann die Aufnahme den Führungssteg in ihrer Vertiefung aufnehmen, wodurch der Führungssteg von der frontseitigen und rückseitigen Einfassung eingefaßt wird. Die Aufnahme ist erfindungsgemäß durch entsprechende Ausgestaltung von Vertiefung, frontseitiger und rückseitiger Einfassung derart ausgestaltet, daß der in ihr aufgenommene Führungssteg große und kleine Umlenkradien aufweisen kann. So kann die Gliederbahn über einen Führungssteg mit geraden und gebogenen Abschnitten geschoben werden. Da kleine Umlenkradien des Führungssteges möglich sind, können starke Biegungen realisiert werden.

Die erfindungsgemäßen Vorteile werden insbesondere erreicht, wenn der Umlenkradius klein im Vergleich zur Gesamtlänge der Gliederbahn ist. Dann kann die Gliederbahn beispielsweise mit schneckenförmiger Führung des Steges aufgerollt werden.

Die Aufnahme für den Führungssteg wird durch einen stirnseitigen Schlitz in den Gliedern der Gliederbahn gebildet. Die Schlitze werden durch die frontseitige und rückseitige Einfassung begrenzt, so daß der Schlitz als Vertiefung den Endabschnitt des Gliedes in die frontseitige und die rückseitigen Einfassung unterteilt. Um kleine Umlenkradien zu erlauben, ist die rückseitige Einfassung kürzer als die Breite des Gliedes, insbesondere mindestens 40 % kürzer als die Breite des Gliedes. Durch die Verkürzung der rückseitigen Einfassung wird erreicht, daß ein in dem Schlitz befindlicher Führungssteg eine stärkere Biegung bzw. einen kleineren Umlenkradius aufweisen kann.

Vorteilhafterweise ist die Aufnahme derart ausgestaltet, daß der Umlenkradius der gebogenen Abschnitte bis auf Werte in der Größenordnung der Breite der Glieder verkleinerbar ist. Weiter vorteilhaft ist eine Aufnahme, die einen Umlenkradius ermöglichst, der kleiner ist als die Breite der Glieder. Diese Ausgestaltungen erlauben, daß die Gliederbahn problemlos über Führungsstege mit geraden und gebogenen Abschnitten geschoben werden kann. Bei einem Umlenkradius in der Größenordnung der Breite eines Gliedes kann eine besonders enge Einrollung der Gliederbahn erreicht werden.

Vorteilhafterweise ist die verkürzte rückseitige Einfassung in Bezug auf die Breite des Gliedes mittig angeordnet. Dadurch kann die Gliederbahn leichter über den Führungssteg geschoben werden, insbesondere über gebogene Abschnitte.

Vorzugsweise wird der Schlitz stirnseitig in die Enden der Glieder eingefräst. Die Verkürzung der rückseitigen Einfassung kann dadurch erfolgen, daß die Enden der rückseitigen Einfassung ausgefräst werden. Dann befinden sich im rückseitigen Bereich an einem oder beiden Enden der rückseitigen Einfassung Ausfräsungen, um die rückseitige Einfassung verkürzt ist. Auf diese Weise erhält man Glieder mit eingefrästem Schlitz und durch Ausfräsungen verkürzter rückseitiger Einfassung. Diese Ausgestaltung ermöglicht eine einfache und kostengünstige Herstellung der erfindungsgemäßen Glieder und Gliederbahn.

Vorteilhafterhafterweise sind die Glieder einstückig ausgebildet. Neben Aluminium ist Kunststoff ein weiteres bevorzugtes Material zur Herstellung der Glieder.

Vorteilhafterweise sind die Glieder aus Hohlprofilen, insbesondere Aluminium-Hohlprofilen, gebildet, die vorzugsweise endlos aus Aluminium gezogen sind. Von den Endlos-Aluminium-Hohlprofilen werden die Glieder in einer Länge heruntergeschnitten, die der Breite der gewünschten Gliederschürze entspricht. Auch bei diesen Gliedern wird die Aufnahme vorzugsweise durch stirnseitige Ausfräsungen an den Enden der Glieder hergestellt. Diese Ausfräsungen können derart gestaltet werden, daß ein Schlitz zur Aufnahme des Führungssteges gebildet und die Verkürzung der rückseitigen Einfassung erreicht wird.

In einer weiter vorteilhaften Ausgestaltung ist die rückseitige Einfassung als U-Profil ausgebildet. Die Enden des U-Profils bilden mit der frontseitigen Einfassung zwei Teilschlitze. Diese Teilschlitze sind bezogen auf die Ausrichtung des Führungssteges vergleichsweise kurz. Die beiden Teilschlitze können schmal ausgebildet sein, so daß der Führungssteg wenig Spiel hat. Da die Teilschlitze bezogen auf die Ausrichtung des Führungssteges kurz sind, können trotzdem kleine Umlenkradien des Führungssteges realisiert werden.

In einer anderen Ausgestaltung weist die rückseitige Einfassung ein rechteckiges Profil auf. Dabei ist es besonders vorteilhaft, wenn die rückseitige Einfassung die rückseitige Wand eines Gliedes mit Hohlprofil fortsetzt. In dieser Ausgestaltung können die Glieder besonders einfach und kostengünstig hergestellt werden, indem die Enden der Glieder stirnseitig derart ausgefräst werden, daß im rückseitigen Bereich der Aufnahme nur die rückseitige Wand der jeweiligen Glieder als rückseitige Einfassung stehen bleibt.

In einer anderen Ausgestaltung ist die rückseitige Einfassung an ihrer dem Schlitz zugewandten Seite konvex gewölbt. Dies kann insbesondere dadurch erreicht werden, daß zur Herstellung des Gliedes ein Hohlprofil, insbesondere Aluminium-Hohlprofil, verwendet wird, dessen rückseitige Wand nach innen gewölbt ist. Werden bei einem solchen Hohlprofil die Enden der Glieder stirnseitig derart ausgefräst, daß im rückseitigen Bereich der Aufnahme nur die rückseitige Wand des jeweiligen Gliedes als rückseitige Einfassung stehen bleibt, so ist die rückseitige Einfassung auf ihrer der Aufnahme zugewandten Seite konvex gewölbt. In dieser Ausgestaltung kann die Gliederbahn besonders leicht über den Führungssteg gleiten, da der Bereich der rückseitigen Einfassung, der mit dem Führungssteg in Kontakt tritt, weitgehend frei von Kanten ist.

In einer weiter bevorzugten Ausgestaltung weist die frontseitige Einfassung in ihrer der Aufnahme bzw. dem Schlitz zugewandten Seite eine Ausnehmung auf. In diese Ausnehmung kann sich der gebogene Führungssteg hineinwölben, so daß noch kleinere Umlenkradien realisiert werden können.

In einer anderen bevorzugten Ausgestaltung sind die Glieder aus einem Hohlprofil und mindestens einer Umlenkklaue gebildet. Die Aufnahme für den Führungssteg ist in die vorzugsweise separat gefertigte Umlenkklaue integriert. Die Umlenkklaue ist bei dieser Ausgestaltung in das stirnseitige Ende des jeweiligen Holprofils eingesteckt. Die Steckverbindung zwischen Hohlprofil und Umlenkklaue kann dadurch realisiert werden, daß das dem Hohlprofil zugewandte Ende der Umlenkklaue als Stecker ausgebildet ist. Dabei wird der Stecker passend zum Hohlraum des Hohlprofils ausgestaltet, so daß der Stecker nach dem Einstecken fest im Hohlraum des Hohlprofils sitzt. Die bevorzugten Ausgestaltungen mit Umlenkklaue haben den Vorteil, daß das sich nahezu über die gesamte Breite der Gliederbahn erstreckende Hohlprofil einerseits und die die Aufnahme beherbergende Umlenkklaue andererseits separat gefertigt werden können. Insbesondere können das Hohlprofil und die Umlenkklaue aus verschiedenen Materialien gefertigt werden. So können als Hohlprofile beispielsweise gezogene Aluminiumhohlprofile verwendet werden. Die Umlenkklaue kann beispielsweise aus einem Material gefertigt werden, das beim Gleiten der Gliederbahn über den Führungssteg einen geringen Verschleiß aufweist. Dies kann u. a. mit bestimmten Kunststoffen erreicht werden. Durch das Einstecken der Umlenkklaue in das Hohlprofil wird die erforderliche feste Verbindung zwischen Hohlprofil und Umlenkklaue hergestellt.

In einer weiteren Verbesserung ist die Umlenkklaue durch Verschweißen, Verkleben, Verschrauben und/oder Vernieten an dem Hohlprofil befestigt.

Das Hohlprofil kann an dem Ende, an dem die Umlenkklaue eingesteckt wird, glatt abgeschnitten sein, so daß die Stirnseite des Hohlprofils, in die die Umlenkklaue eingesteckt wird, eine glatte Schnittfläche darstellt. Dies erlaubt eine besonders einfache und kostengünstige Herstellung der Hohlprofile und der Glieder.

In einer anderen Ausgestaltung befindet sich im Bereich des Endes des Hohlprofils eine rückseitige Ausfräsung. Diese rückseitige Ausfräsung bewirkt, daß an der Frontseite des Hohlprofils ein endständiger Überstand verbleibt. In dieser Ausgestaltung ist die Umlenkklaue derart geformt, daß sie im Bereich der rückseitigen Ausfräsung, d. h. von der Frontseite her gesehen hinter dem Überstand in das Hohlprofil einsteckbar ist. Diese bevorzugte Ausgestaltung ergibt ein verbessertes ästhetisches Erscheinungsbild der Gliederbahn, da die eingesteckte Umlenkklaue zur Frontseite hin von dem Überstand zumindest teilweise, insbesondere vollständig, verdeckt bzw. verblendet ist.

Gemäß einer weiteren Verbesserung weisen die Ausgestaltungen mit Umlenkklaue an ihrer dem Führungssteg zugewandten Seite eine Gleitfläche, insbesondere aus einem gleitfreundlichen Material auf. Vorteilhafterweise sind Umlenkklaue aus einem gleitfreundlichen Material, insbesondere aus einem gleitfreundlichen Kunststoff gefertigt. Diese Ausgestaltungen ermöglichen ein besseres Gleiten der Gliederbahn über den Führungssteg. Die Möglichkeit der separaten Fertigung der Umlenkklaue erlaubt die Herstellung aus einem anderen Material als der Rest des Gliedes, insbesondere aus einem gleitfreundlichen Kunststoff. Dies macht die Herstellung einer Gliederbahn mit verbesserten Gleiteigenschaften insgesamt einfacher und preisgünstiger.

Die Gliederbahn kann auch derart ausgestaltet sein, daß nicht jedes Glied eine rückseitige Einfassung aufweist. Insbesondere kann bei der Ausgestaltung mit Umlenkklaue darauf verzichtet werden, daß jedes Glied eine solche aufweist. Beispielsweise kann nur jedes zweite, dritte oder vierte Glied mit einer rückseitigen Einfassung versehen sein. Dadurch kann insbesondere im Fall der Ausgestaltung mit Umlenkklaue der Herstellungsaufwand verringert werden.

Ausführungsbeispiele der Erfindung werden anhand der beigefügten Figuren im Einzelnen erläutert. Dabei zeigen:
- Figur 1 a:: eine Draufsicht auf die Stirnseite 18 eines Gliedes 10 nach dem Stand der Technik,
- Figur 1b:: eine Schrägansicht des vorbekannten Gliedes 10 mit Führungssteg 3,
- Figur 1c:: eine vergrößerte Schrägansicht des Endes 16 des vorbekannten Gliedes 10 mit Führungssteg 3,
- Figur 2a:: eine Schrägansicht einer erfindungsgemäßen Gliederbahn 1 in aufgerolltem Zustand,
- Figur 2b:: eine Seitenansicht einer erfindungsgemäßen Gliederbahn 1 in aufgerolltem Zustand,
- Figur 3a:: eine Draufsicht auf die Stirnseite 18 eines erfindungsgemäßen Gliedes 10 mit rückseitiger Einfassung 34 in Form eines U-Profils ohne Führungssteg 3,
- Figur 3b:: eine Seitenansicht des Endes 16 eines erfindungsgemäßen Gliedes 10 mit rückseitiger Einfassung 34 in Form eines U-Profils ohne Führungssteg 3,
- Figur 3c:: eine Schrägansicht eines erfindungsgemäßen Gliedes 10 mit rückseitiger Einfassung 34 in Form eines U-Profils ohne Führungssteg 3,
- Figur 3d:: eine Schrägansicht des Endes 16 eines erfindungsgemäßen Gliedes 10 mit rückseitiger Einfassung 34 in Form eines U-Profils ohne Führungssteg 3,
- Figur 3e:: eine Draufsicht auf die Stirnseite 18 eines erfindungsgemäßen Gliedes 10 mit rückseitiger Einfassung 34 in Form eines U-Profils mit Führungssteg 3,
- Figur 3f:: eine Schrägansicht eines erfindungsgemäßen Gliedes 10 mit rückseitiger Einfassung 34 in Form eines U-Profils mit Führungssteg 3,
- Figur 3g:: eine Schrägansicht des Endes 16 eines erfindungsgemäßen Gliedes 10 mit rückseitiger Einfassung 34 in Form eines U-Profils mit Führungssteg 3,
- Figur 4a:: eine Draufsicht auf die Stirnseite 18 eines erfindungsgemäßen Gliedes 10 mit rückseitiger Einfassung 34 in Form eines Rechteck-Profils ohne Führungssteg 3,
- Figur 4b:: eine Seitenansicht des Endes 16 eines erfindungsgemäßen Gliedes 10 mit rückseitiger Einfassung 34 in Form eines Rechteck-Profils ohne Führungsstegs 3,
- Figur 4c:: eine Schrägansicht des Endes 16 eines erfindungsgemäßen Gliedes 10 mit rückseitiger Einfassung 34 in Form eines Rechteck-Profils ohne Führungssteg 3,
- Figur 4d:: eine Draufsicht auf die Stirnseite 18 eines erfindungsgemäßen Gliedes 10 mit rückseitiger Einfassung 34 in Form eines Rechteck-Profils mit Führungssteg 3,
- Figur 4e:: eine Schrägansicht eines erfindungsgemäßen Gliedes 10 mit rückseitiger Einfassung 34 in Form eines Rechteck-Profils mit Führungssteg 3,
- Figur 4f:: eine Schrägansicht des Endes 16 eines erfindungsgemäßen Gliedes 10 mit rückseitiger Einfassung 34 in Form eines Rechteck-Profils mit Führungssteg 3,
- Figur 4g:: eine Draufsicht auf die Stirnseite 18 eines erfindungsgemäßen Gliedes 10 mit konvex gewölbter rückseitiger Einfassung 34 ohne Führungssteg 3,
- Figur 4h:: eine Seitenansicht des Endes 16 eines erfindungsgemäßen Gliedes 10 mit konvex gewölbter rückseitiger Einfassung 35 ohne Führungssteg 3,
- Figur 4i:: eine Schrägansicht des Endes 16 eines erfindungsgemäßen Gliedes 10 mit konvex gewölbter rückseitiger Einfassung 34 ohne Führungssteg 3,
- Figur 4j:: eine Draufsicht auf die Stirnseite 18 eines erfindungsgemäßen Gliedes 10 mit konvex gewölbter rückseitiger Einfassung 34 mit Führungssteg 3 und
- Figur 4k:: eine Schrägansicht des Endes 16 eines erfindungsgemäßen Gliedes 10 mit konvex gewölbter rückseitiger Einfassung 34 mit Führungssteg 3,

Figuren 1a bis 1c zeigen die vorbekannte Ausgestaltung der Glieder 10. Der Schlitz 30 ist stirnseitig in das Ende 16 des Gliedes 10 eingefräst und erstreckt sich über die gesamte Breite B des Gliedes 10. Der Schlitz ist so schmal, daß er dem Führungssteg 3 nur relativ wenig Spiel lässt. Dadurch kann nur ein Führungssteg 3 in dem Schlitz 30 aufgenommen werden, der gerade ist oder allenfalls leichte Biegungen mit großen Umlenkradien R aufweist.

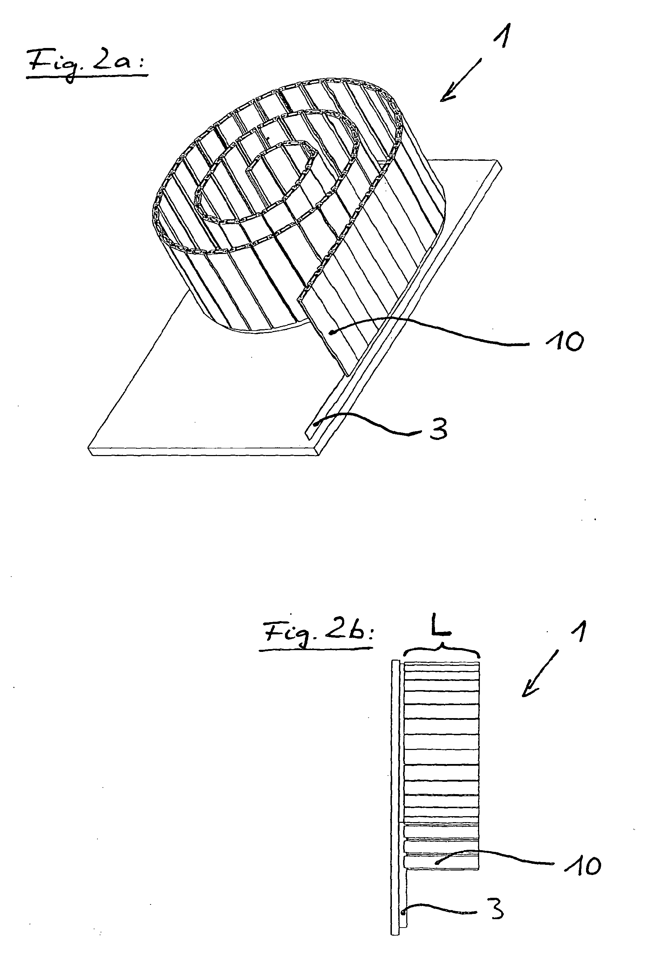

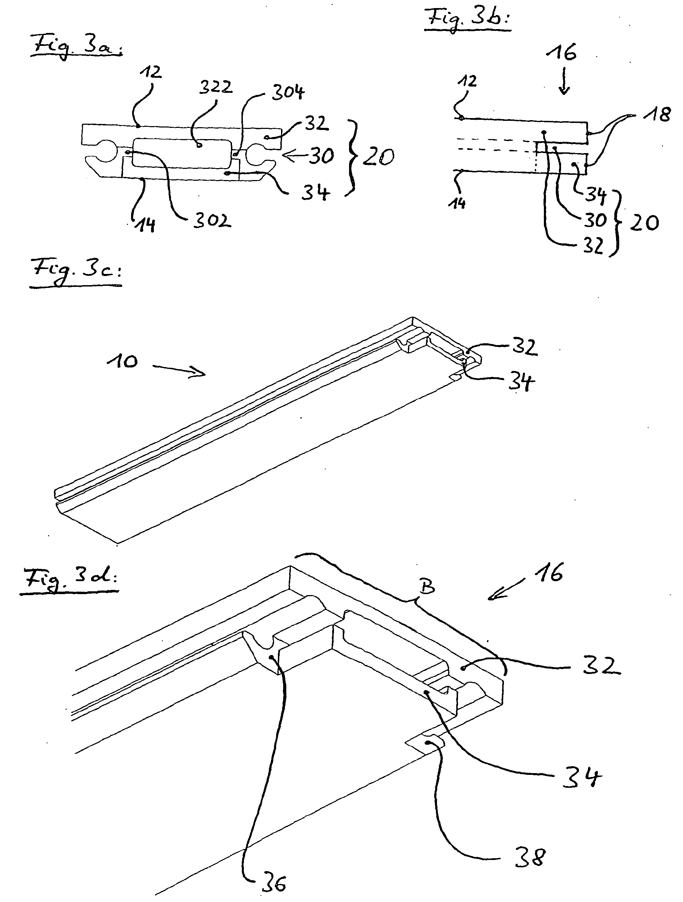

Figur 2a zeigt eine erfindungsgemäße Gliederbahn 1 in Schrägansicht. Die Gliederbahn 1 wird durch die gelenkig verbundenen Glieder 10 gebildet. Die stirnseitig offene Aufnahme 20 an den Enden 16 der Glieder fasst den Führungssteg 3 ein. Der Führungssteg 3 weist einen geraden und einen schneckenförmig gebogenen Bereich auf. In dem in Figur 2a gezeigten Zustand ist die erfindungsgemäße Gliederbahn 1 im schneckenförmig gebogenen Bereich des Führungssteges 3 auf engem Raum eingerollt. Figur 2b zeigt eine Seitenansicht der eingerollten Gliederbahn 1 mit Gliedern 10 der Länge L. Zum Zwecke der Vereinfachung der Darstellung ist in Figuren 2a und 2b die Führung der Gliederbahn nur einseitig dargestellt. Vorzugweise wird die Gliederbahn 1 mit zwei Führungsstegen 3 an zwei Seiten, d. h. an beiden Enden 16 der Glieder 10 geführt.

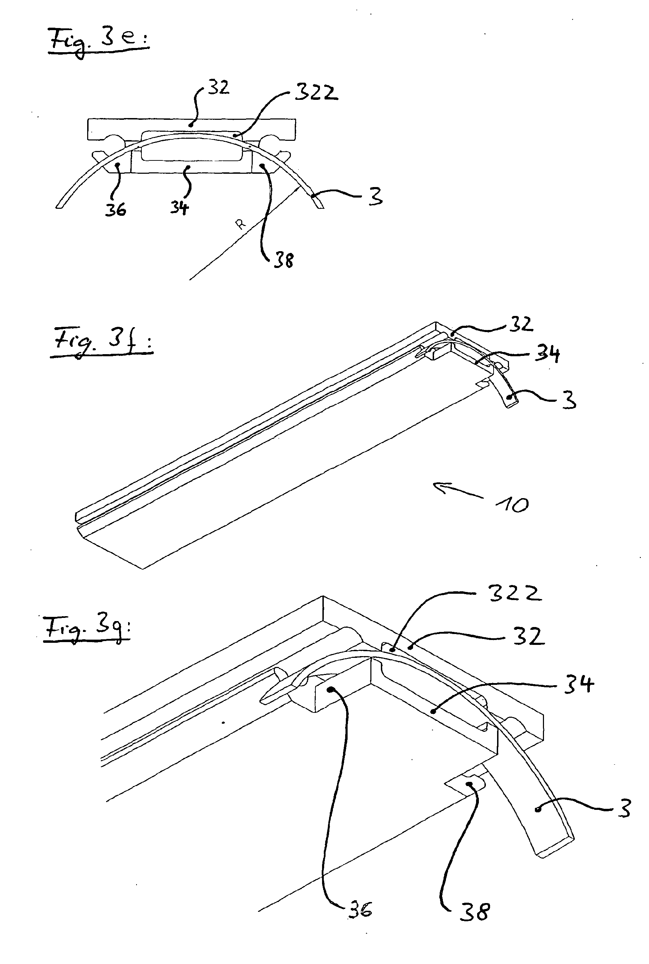

Figuren 3a bis 3g zeigen eine erfindungsgemäße Ausgestaltung der Aufnahme 20 am Ende 16 eines Gliedes 10. Das in den Figuren 3a bis 3g gezeigte Glied 10 ist aus einem Hohlprofil gebildet und hat eine Frontseite 12 und eine Rückseite 14. Figur 3a zeigt eine Draufsicht auf die dem Führungssteg 3 zugewandte Stirnseite 18. Figur 3b zeigt eine Seitenansicht des Endes 16 des Gliedes 10 mit der erfindungsgemäßen Aufnahme 20. Die Stirnseite 18 ist in Figur 3b auf der rechten Seite. Die Aufnahme 20 wird gebildet durch einen Schlitz 30 zwischen der frontseitigen Einfassung 32 und der rückseitigen Einfassung 34. Der Schlitz 30 ist von der Stirnseite 18 in das Ende 16 des einstückigen Gliedes 10 eingefräst. Die rückseitige Einfassung 34 hat ein U-Profil, so daß die Aufnahme 20 aus zwei vergleichsweise kurzen Teilschlitzen 302 und 304 gebildet wird. Rechts und links der rückseitigen Einfassung 34 befinden sich Ausfräsungen 36 und 38, so daß die rückseitige Einfassung gegenüber der Breite B des Gliedes und gegenüber der frontseitigen Einfassung 32 verkürzt ist. Bezogen auf die Breite B des Gliedes 10 ist die verkürzte rückseitige Einfassung 34 mittig angeordnet. Die frontseitige Einfassung 32 weist an ihrer der Aufnahme 20 bzw. dem Schlitz 30 zugewandten Seite eine Ausnehmung 322 auf. Aufgrund der Ausfräsungen 36 und 38 und der Ausnehmung 322, kann ein Führungssteg mit kleinem Umlenkradius R zwischen der frontseitigen Einfassung 32 und der rückseitigen Einfassung 34 aufgenommen werden. Ebenso kann ein gerader Führungssteg und ein Führungssteg mit großem Umlenkradius R aufgenommen werden. Dadurch kann die Gliederbahn 1 über einen Führungssteg 3 mit geraden und stark gebogenen Abschnitten geschoben werden.

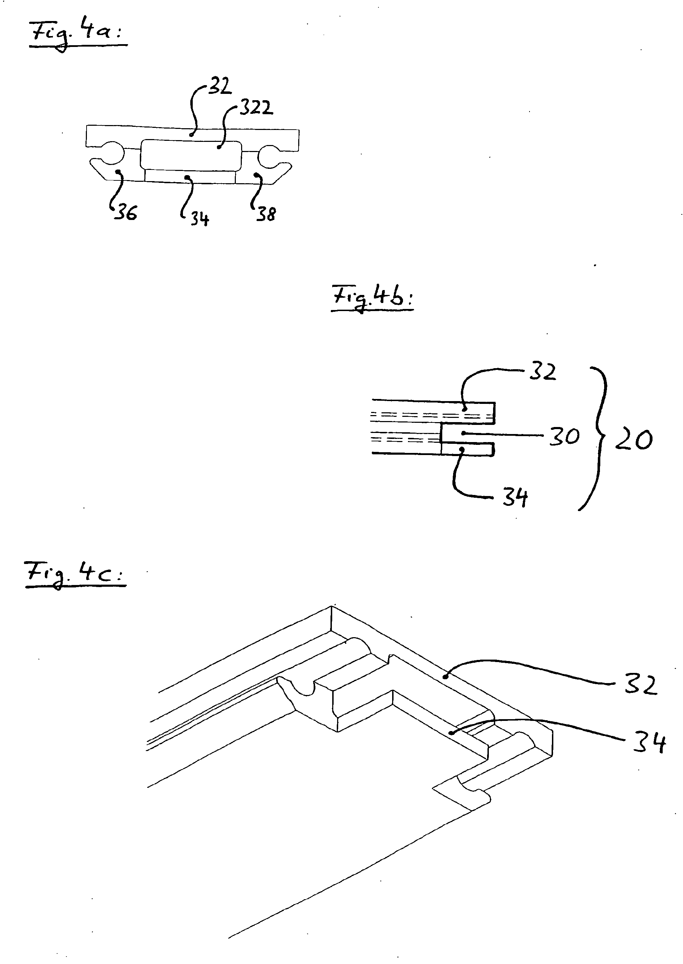

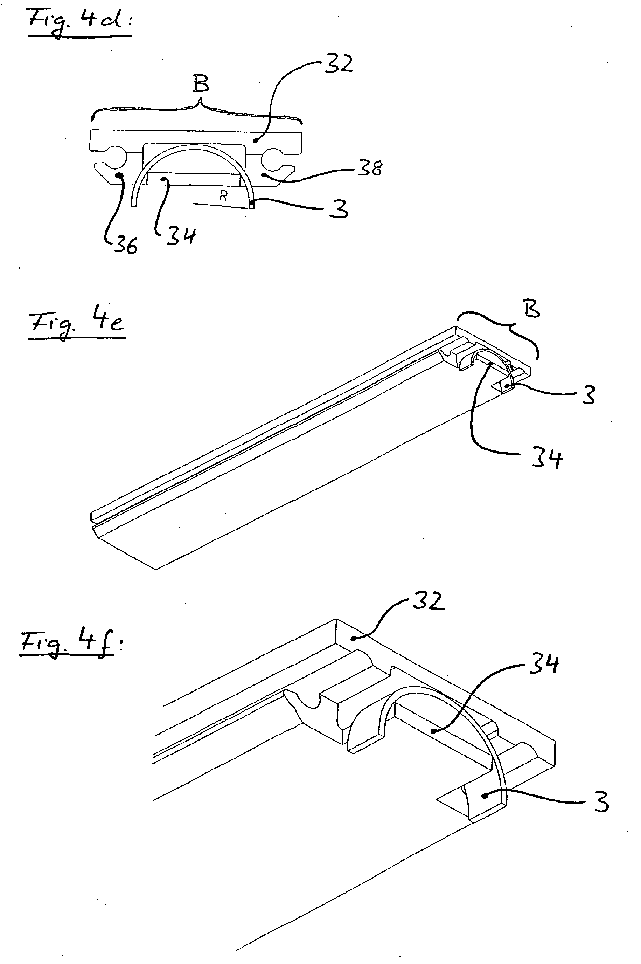

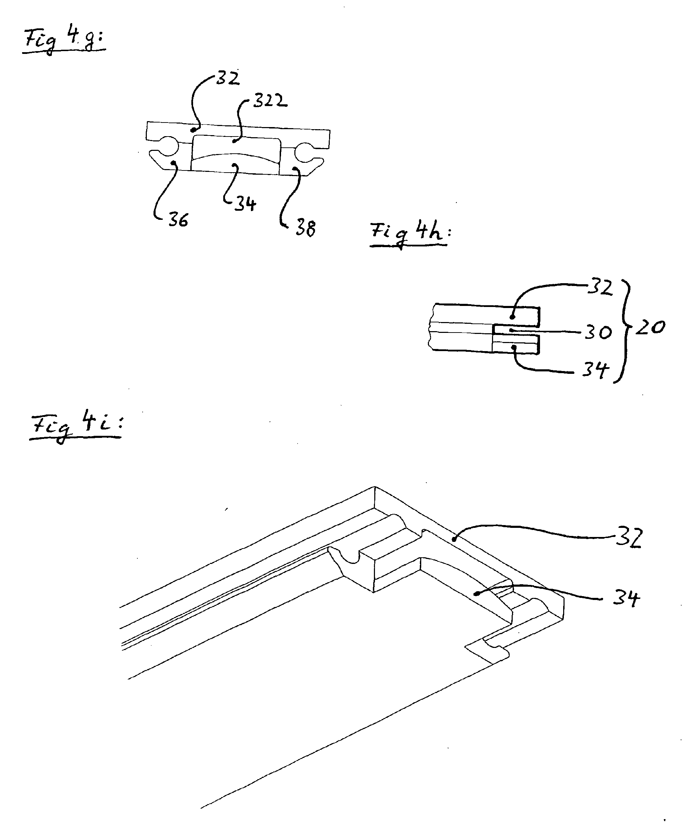

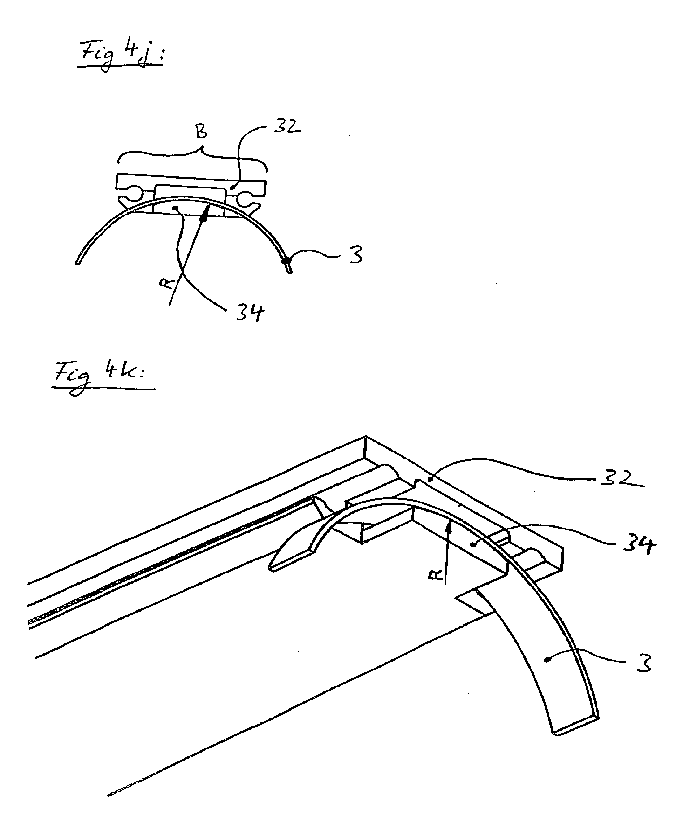

Figuren 4a bis 4f zeigen ein erfindungsgemäßes Glied 10, bei dem die rückseitige Einfassung 34 ein rechteckiges Profil aufweist. Das Glied 10 ist aus einem Hohlprofil gebildet. Die Ausfräsungen 36 und 38 rechts und links von der rückseitigen Einfassung 34 sind derart ausgebildet, daß als rückseitige Einfassung 34 nur ein Bestandteil der rückseitigen Wand des Gliedes 10 stehen bleibt. Der rückseitige Teil der Seitenwände des Hohlprofils der Glieder 10 ist bei der gezeigten Ausgestaltung im Bereich der Aufnahme 20 vollständig weggefräst. In dieser Ausgestaltung können ebenfalls Führungsstege 3 mit kleinem Umlenkradius R in der Aufnahme aufgenommen werden. Bei geeigneter Ausgestaltung wird ein Umlenkradius R möglich, der kleiner ist als die Breite B des Gliedes 10.

Figuren 4g bis 4k zeigen ein erfindungsgemäßes Glied 10, bei dem die rückseitige Einfassung 34 an ihrer der Aufnahme 20 bzw. dem Schlitz 30 zugewandten Seite konvex gewölbt ist. Bei der gezeigten Ausgestaltung ist das Glied 10 aus einem Hohlprofil, vorzugsweise aus einem Aluminium-Hohlprofil, gebildet, dessen rückseitige Wand konvex nach innen gewölbt ist. Werden bei einem derartigen Glied 10 die stirnseitigen Ausfräsungen derart ausgebildet, daß der rückseitige Teil der Seitenwände des Hohlprofils weggefräst ist, so verbleit als rückseitige Einfassung 34 ein Fortsatz der nach innen gewölbten rückseitigen Wand des Gliedes 10. Das auf diese Weise hergestellte Glied 10 kann einstückig ausgebildet und besonders einfach und kostengünstig hergestellt werden. Es weist eine rückseitige Einfassung 34 auf, die an ihrer der Aufnahme 20 bzw. dem Schlitz 30 zugewandten Seite im Wesentlichen rund ausgestaltet ist. Aufgrund dieser Ausgestaltung können die Glieder leichter auch über stärker gebogene Abschnitte des Führungssteges 3 gleiten.

Mit der vorbeschriebenen Erfindung wird eine Reihe von Vorteilen erreicht. Die erfindungsgemäße Ausgestaltung der Glieder lässt Führungsstege mit kleinen Umlenkradien zu, so daß eine aus diesen Gliedern gefertigte Gliederbahn auf engem Raum eingerollt werden kann. Weiterhin sind die Glieder nach einer besonderen Ausgestaltung der Erfindung einstückig und kostengünstig herstellbar. Die Ausgestaltung mit Umlenkschuh bzw. Umlenkrolle ermöglicht ein besonders leichtes Gleiten der Gliederbahn über den Führungssteg.

## Patentansprüche

1. Gliederbahn (1), insbesondere Gliederschürze oder Abdeckschürze, zur Abdeckung von Öffnungen, insbesondere von Werkzeugmaschinen, mit Gliedern (10), die gelenkig miteinander verbunden sind, wobei die Glieder (10) eine Frontseite (12) und eine Rückseite (14) aufweisen, und wobei die Glieder (10) an mindestens einem ihrer Enden (16) eine Aufnahme (20) für einen Führungssteg (3) mit Biegung zur Führung der Gliederbahn (1) aufweisen, **dadurch gekennzeichnet,**
**dass** die Aufnahme (20) als Schlitz (30) in der Stirnseite (18) des jeweiligen Gliedes (10) ausgebildet ist,
wobei sich der Schlitz (30) zwischen einer frontseitigen Einfassung (32) und einer rückseitigen Einfassung (34) befindet,
wobei die rückseitige Einfassung (34) für einen Führungssteg (3) mit kleinem Umlenkradius (R) der Biegung kürzer als die Breite (B) des jeweiligen Gliedes (10) ausgebildet ist,
wobei die rückseitige Einfassung (34) in Bezug auf die Breite (B) des jeweiligen Gliedes mittig angeordnet ist und
wobei die rückseitige Einfassung (34) durch rechts- und/oder linksseitige Ausfräsungen (36, 38) an den Enden der rückseitigen Einfassung (34) verkürzt ausgebildet ist.

2. Gliederbahn nach Anspruch 1, **dadurch gekennzeichnet,**
**dass** in der Aufnahme (20) ein Führungssteg (3) mit einem Umlenkradius (R) aufnehmbar ist, wobei der Umlenkradius (R) klein ist im Verhältnis zur Gesamtlänge der Gliederbahn, vorzugsweise in der Größenordnung der Breite (B) der Glieder (10) liegt, und weiter vorzugsweise kleiner ist als die Breite (B) der Glieder (10).

3. Gliederbahn nach Anspruch 1 oder 2, **dadurch gekennzeichnet,**
**dass** die Glieder (10) einstückig ausgebildet sind.

4. Gliederbahn nach Anspruch 3, **dadurch gekennzeichnet,**
**dass** die Glieder (10) aus Hohlprofilen, insbesondere aus gezogenen Aluminium-Hohlprofilen, gebildet sind, deren Länge (L) auf die Breite der Gliederbahn (1) geschnitten ist, und an deren Enden (16) die Aufnahme (20) durch stirnseitige Ausfräsungen (30, 36, 38) gebildet ist.

5. Gliederbahn nach einem der Ansprüche 1 bis 4, **dadurch gekennzeichnet,**
**dass** die rückseitige Einfassung als U-Profil ausgebildet ist, wobei die Enden des U-Profils mit der frontseitigen Einfassung (32) zwei schmale und kurze Teilschlitze (302, 304) mit wenig Spiel für den Führungssteg (3) bilden.

6. Gliederbahn nach einem der Ansprüche 1 bis 4, **dadurch gekennzeichnet,**
**dass** die rückseitige Einfassung ein rechteckiges Profil aufweist und einen Fortsatz der rückseitigen Wand des Gliedes (10) bildet.

7. Gliederbahn nach einem der Ansprüche 1 bis 6, **dadurch gekennzeichnet,**
**dass** die Glieder aus einem Hohlprofil und einer Umlenkklaue gebildet sind.

8. Gliederbahn nach Anspruch 7, **dadurch gekennzeichnet,**
**dass** zwischen Hohlprofil und Umlenkklaue eine Steckverbindung gebildet ist.

## Claims

1. Articulated track (1), in particular articulated apron or cover apron, for covering openings, in particular of machine tools, comprising links (10) which are hinged together, the links (10) having a front (12) and a rear (14), and the links (10) having on at least one of the ends (16) thereof a seat (20) for a guide web (3) with a curve for guiding the articulated track (1), **characterised in that**
the seat (20) is configured as a slot (30) in the end face (18) of the respective link (10),
wherein the slot (30) is located between a front border (32) and a rear border (34), wherein the rear border (34) is configured for a guide web (3) with a small turning radius (R) of the curve being shorter than the width (B) of the respective link (10), wherein the rear border (34) is positioned centrally in relation to the width (B) of the respective link and
wherein the rear border (34) is shortened by right-hand and/or left-hand notches (36, 38) at the ends of the rear border (34).

2. Articulated track according to claim 1, **characterised in that** a guide web (3) having a turning radius (R) is accommodated in the seat (20), wherein the turning radius (R) is small in relation to the overall length of the articulated track, preferably approximating the width (B) of the links (10), and also preferably is smaller than the width (B) of the links (10).

3. Articulated track according to claim 1 or 2, **characterised in that** the links (10) are formed integrally.

4. Articulated track according to claim 3, **characterised in that** the links (10) are formed from hollow profiles, in particular from drawn aluminium hollow profiles, the length (L) of which is cut to the width of the articulated track (1) and at the ends (16) of which, the seat (20) is formed by end face notches (30, 36, 38).

5. Articulated track according to any one of claims 1 to 4, **characterised in that** the rear border is configured as a U profile, wherein the ends of the U profile with the front border (32) form two narrow and short partial slots (302, 304) with a small clearance for the guide web (3).

6. Articulated track according to any one of claims 1 to 4, **characterised in that** the rear border has a rectangular profile and forms a continuation of the rear wall of the link (10).

7. Articulated track according to any one of claims 1 to 6, **characterised in that** the links are formed from a hollow profile and a deflection claw.

8. Articulated track according to claim 7, **characterised in that** a plug-in connection is formed between hollow profile and deflection claw.

## Revendications

1. Dispositif à maillons de chaîne (1), en particulier un tablier de maillons ou un tablier de recouvrement, permettant de couvrir des ouvertures, en particulier de machines-outils, muni de maillons (10), qui sont reliés les uns aux autres de manière articulée, les maillons (10) présentant une face avant (12) et une face arrière (14) et les maillons (10) présentant à au moins une de leurs extrémités (16) un logement (20) destiné à une barrette de guidage (3) présentant une courbure servant à guider le dispositif à maillons de chaîne (1), **caractérisé en ce,**
**que** le logement (20) est conçu comme une fente (30) dans la face avant (18) du maillon respectif (10),
dans lequel la fente (30) se situe entre un encadrement frontal (32) et un encadrement arrière (34),
dans lequel l'encadrement arrière (34) pour une barrette de guidage (3) est formé d'un petit rayon de rotation (R) de la courbure plus petit que la largeur (B) du maillon (10) respectif,
dans lequel l'encadrement arrière (34) est centré par rapport à la largeur (B) du maillon respectif et
dans lequel l'encadrement arrière (34) est raccourci au niveau des extrémités de l'encadrement arrière (34) par des fraisures à droite et/ou à gauche (36, 38).

2. Dispositif à maillons de chaîne selon la revendication 1, **caractérisé en ce,**
**qu'**une barrette de guidage (3) avec un rayon de rotation (R) peut être reçue dans le logement (20), le rayon de rotation (R) étant petit par rapport à la longueur totale du dispositif à maillons de chaîne, se situant de préférence dans l'ordre de grandeur de la largeur (B) des maillons (10), et étant de manière davantage préférée plus petit que la largeur (B) des maillons (10).

3. Dispositif à maillons de chaîne selon la revendication 1 ou 2, **caractérisé en ce,**
**que** les maillons (10) sont réalisés d'un seul tenant.

4. Dispositif à maillons de chaîne selon la revendication 3, **caractérisé en ce,**
**que** les maillons (10) sont formés à partir de profils creux, en particulier à partir de profils creux en aluminium étiré, dont la longueur (L) est taillée sur la largeur du dispositif à maillons de chaîne (1) et aux extrémités desquels (16), le logement (20) est formé par des fraisures frontales (30, 36, 38).

5. Dispositif à maillons de chaîne selon l'une quelconque des revendications 1 à 4, **caractérisé en ce,**
**que** l'encadrement arrière est réalisé comme un profil en U, les extrémités du profil en U formant avec l'encadrement avant (32) deux fentes partielles étroites et courtes (302, 304) avec peu de jeu pour la barrette de guidage (3).

6. Dispositif à maillons de chaîne selon l'une quelconque des revendications 1 à 4, **caractérisé en ce,**
**que** l'encadrement arrière présente un profil rectangulaire et forme un prolongement de la paroi arrière du maillon (10).

7. Dispositif à maillons de chaîne selon l'une quelconque des revendications 1 à 6, **caractérisé en ce,**
**que** les maillons sont formés à partir d'un profil creux et d'une griffe de rotation

8. Dispositif à maillons de chaîne selon la revendication 7, **caractérisé en ce,**
**qu'**une connexion enfichable est formée entre le profil creux et la griffe de rotation.
